# EUROPEAN PATENT SPECIFICATION

(11) **EP 0 300 482 B1**
(45) Date of publication and mention of the grant of the patent: **07.12.1994**
(21) Application number: 88111784.0
(22) Date of filing: 21.07.1988
(51) Int. Cl.: F21M 7/00

(54) **Automotive lamp assembly**
Kraftfahrzeugscheinwerfer
Phare pour automobile

(30) Priority: 22.07.1987 JP 111403/87 U
(43) Date of publication of application: 25.01.1989
(73) Proprietor: ICHIKOH INDUSTRIES LIMITED, Shinagawa-ku Tokyo 141 (JP)
(72) Inventor: Chikada, Akira, Isehara-shi Kanagawa 259-11 (JP)
(74) Representative: Grünecker, Kinkeldey, Stockmair & Schwanhäusser Anwaltssozietät

(56) References cited:
- DE-A- 3 425 291
- DE-U- 8 535 949
- FR-A- 1 235 402
- FR-A- 2 071 808
- FR-A- 2 173 282
- US-A- 3 558 872

## Description

The present invention relates to an automotive lamp assembly, and more particularly to an improved automotive lamp assembly of a water-proof structure, according to the preamble of Claim 1.

Generally, the lamp assembly of this type comprises a lamp housing, lens disposed at the front of the housing, reflector disposed inside the housing, lamp bulb disposed in the reflector, rear cover disposed at the back of the housing, and a cover holder fixing the rear cover to the housing.

The front opening of the housing is sealed by the lens, while the rear opening is sealed by the rear cover. The rear cover is made of an elastic material such as rubber and so fittable on the back of the housing and bulb cap as to prevent water from entering the housing inside, namely, the inside of the lamp house.

The rear cover itself takes the form of a hat of which the flange is folded, as disclosed in the Japanese Unexamined Utility Model Publication No. 55-64202. It has at the center thereof an aperture in which the bulb cap is fitted and a recess in the inner side of the flange or folded portion thereof. The rear cover is fitted to the back of the housing and with the flange thereof fitted on a beveled portion of the back of the housing and also on a cylindrical portion formed contiguously to the beveled portion and with the central portion fitted on the bulb cap, while a projection formed on the cylindrical portion of the housing is fitted in the recess of the rear cover, whereby the folded portion is forced to the wall forming a part of the beveled portion at the back of the housing to prevent water from entering from between the housing and rear cover.

However, since the inner wall of the aperture of the rear cover of the above-mentioned structure will not work well as a seal unless the projection is securely fitted in the recess, it is necessary to fit the rear cover to the housing as designed. However, any user not well familiar with the lamp structure of this type who has replaced the lamp bulb of such a lamp assembly could not reassemble the rear cover to the housing as specified since in many cases the rear portion of the lamp assembly is located deep inside the car body and in a narrow place. If it is not correctly fitted, the rear cover will be held, due to its own elasticity, by the housing. So the rear cover is likely to be raised if attacked by any flowing water under a high pressure, with the result that the water easily enters the housing inside. In case the lamp assembly is adopted as an automotive head light, if water under a high pressure is directed by mistake toward the lamp assembly while the the car bottom is being washed, the water may easily enter the housing since the bottom of any ordinary car is not closed and also the lamp assembly is not closed.

From FR-A-2 173 282, an automotive lamp assembly is known comprising a lamp housing having a hollow cylindrical portion provided with a rear opening, a reflector disposed in the lamp housing, a bulb disposed in and attached to the reflector, a rear cover made of an elastic material which is fitted on the rear ends of the bulb and lamp housing, and a cover holder fitted and coupled to the housing with the rear cover held between the cover holder and the housing, said rear cover having a boss portion to be fitted to the bulb at a central region, having first sealing means provided at an outer region thereof which is fitted between the housing and the cover holder and having second sealing means provided on both sides thereof in a region located between the central and outer regions.

In other words, from FR-A-2 173 282 (in particular from figure 2 thereof) two projections are provided on both surfaces of the sealing member, that is, one projection is provided on the inner surface and the other is provided on the outer surface. However, these two projections are circular, and each shape and form of the contact surfaces seem to be flat. Due to these arrangements, if the surface of each projection facing a part of a socket and/or surface of the part of the socket, facing the surface of each projection are not formed in ruler-flat, the projections cannot be in uniform contact with the respective parts of the socket, which causes a decrease in maintaining the sealing effect with such arrangement so that the sealing member has to be pressed by a considerably strong force. In this instance, when the sealing member is compressed by fitting the cap member, the cap member receives spring-back from the sealing member, causing the cap member to be inclined with respect to the central axis of the lamp assembly, which leads to the inclining of the sealing member. When the cap member is locked to the ring in this state, the sealing member is disposed between the ring and the cap member with a part or the whole of the sealing member being deformed, which causes a decrease in the sealing effect. In such an assembly in which the lamp is sealed, the inner pressure increases due to the heat emitted from the bulb, causing a further decrease in the sealing effect of the projections.

With the lamp assembly of the cited prior art, it is not possible to apply a uniform force onto the projections, permitting uniform compression of the two projections and ensuring the sealing effect.

It is, therefore, an object of the present invention to provide an automotive lamp assembly in which a force is uniformly provided onto the projections of the second sealing means permitting the uniform compression of said two projections and ensuring the sealing effect.

This object is achieved by the characterising features of claim 1.

By these arrangements, when the cover holder is attached to the rear cover, a force is applied uniformly onto the projections, permitting the uniform compression of said two projections ensuring the sealing effect.

The first sealing means is provided in the form of an O-ring at the free end of the rear cover, the free end being located on the cylindrical portion of the housing when the rear cover is fitted onto the latter. The portion of the rear cover, between the end of the aperture in the rear cover and the portion of the rear cover by which the O-ring receiving space is to be defined when the housing, rear cover and cover holder are assembled together, can be of a size corresponding to the diameter of the bore wall of the cover holder which defines an O-ring receiving space, whereby the first sealing means can be forcibly fitted into the O-ring receiving space defined by the cover holder just by fitting the cover holder onto the housing. Further, the housing may be provided with a wall above the rear opening in the cylindrical portion thereof, and the cover holder is provided with a wall which touches this wall. As the cover holder is fitted on the rear cover, it pushes the rear end of the rear cover which can thus be moved. Therefore, the rear cover can be fitted more correctly and securely.

According to the present invention, the rear cover is provided with two projections in a region thereof between the central and outer regions, and also the wall of the projection directed toward the housing inside is inclined inwardly as viewed from its base, so that air may flow outwardly from the housing inside through the clearance between the housing and rear cover when the bulb is turned on.

In such a lamp assembly provided with such projections, the projections located between the housing and cover holder can work with the aforementioned sealing member to block any water passing toward the housing inside between the housing and rear cover, even if the air in the housing is expanded due to the heat dissipated from the bulb energized, the projections are forcibly pressed to the housing due to the air pressure because of the provision of the aforementioned wall, so that the air under pressure going toward the sealing member between the housing and rear cover can be blocked and thus the sealing member can maintain the sealing effect. Further, the projections can be disposed on the rear cover at a position between the wall above the rear opening of the cylindrical portion of the housing and the wall of the cover holder which opposes the wall of the cylindrical portion, so that the length of the rear portion of the lamp assembly can be reduced. The projections should preferably be gradually thinner as it goes toward its edge which is to be in contact with the housing. Namely, it should preferably have a triangular section. Such a projection has a greater flexibility due to which it can provide a more effective sealing against the water coming from outside and air under pressure from the housing inside.

When pressed by the cover holder fitted onto the housing from the back of the rear cover, the further projection, if appropriately formed in sectional shape, can effectively convey the force from the cover holder to the two projections which in turn will be positively flexed. Thus, the further projection can enhance the sealing action of the two projections. The sectional shape of the further projection is desirably a triangular one of which the apex directed toward the cover holder, whereby the two projections can be evenly flexed.

These and other objects and advantages of the present invention will be better understood from the ensuing description made, by way of example, of the embodiment according to the present invention with reference to the drawings.

### BRIEF DESCRIPTION OF THE DRAWINGS

Fig. 1 is a side elevation showing the external view of the automotive lamp assembly according to the present invention,
Fig. 2 is an exploded perspective view of the lamp assembly shown in Fig. 1;
Fig. 3 is a sectional view, enlarged in scale, taken axially;
Fig. 4 is an axial-sectional view, enlarged in scale, showing the rear cover and cover holder mounted on the housing;
Fig. 5 is an explanatory drawing showing the assembled state of the cover holder; and
Fig. 6 is also an explanatory drawing showing the construction and action of the projection on the rear cover.

### DETAILED DESCRIPTION OF THE PREFERRED EMBODIMENT

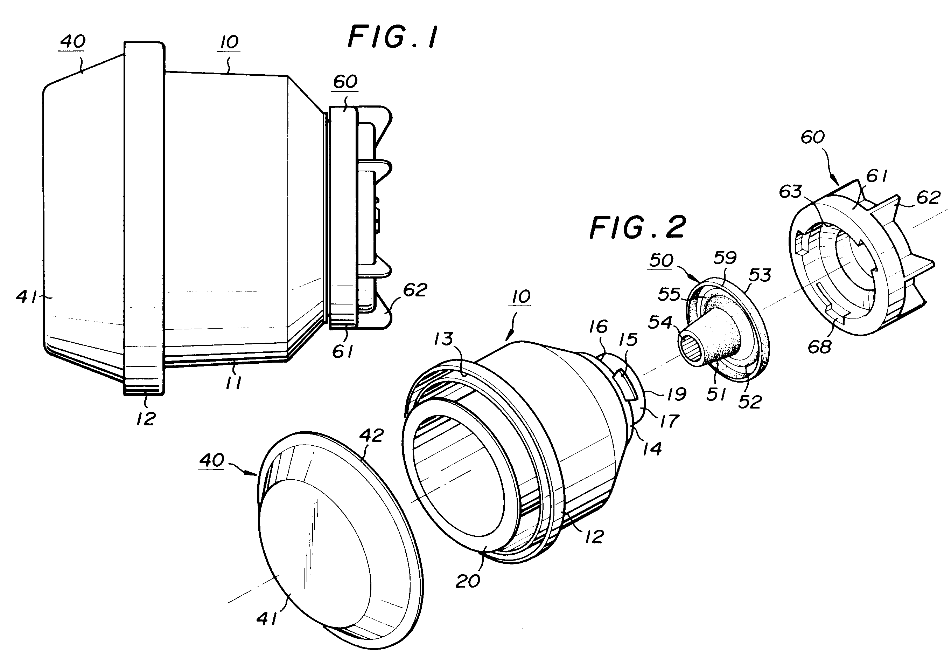

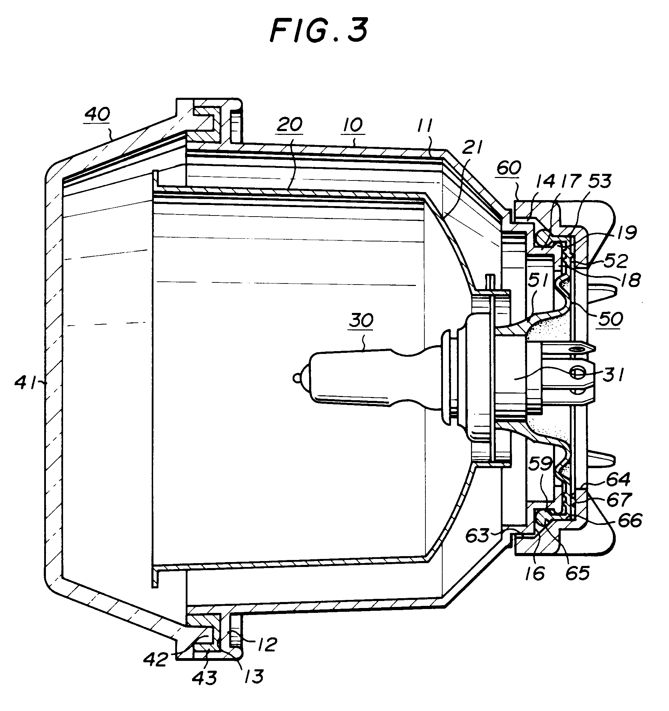

The lamp assembly according to the present invention is employed as, for example, an automotive head light. As shown in Figs. 1 to 3, it comprises a housing, reflector 20 disposed inside the housing 10, bulb 30 disposed in the housing 10, lens 40 mounted on the front of the reflector 20, rear cover 50 fitted on the rear of the housing 10, and a cover holder 60 fitted on the rear cover 50 to fix the latter to the housing 10.

The housing 10 is made of, for example, a synthetic resin by molding. The housing 10 has a body 11 consisting of a front cylindrical portion, a beveled portion and two rear cylindrical portions 14,17. Namely, it takes the form of a hollow bell opened at both ends. The front cylindrical portion of the housing body 11 has formed integrally therewith a member 12 of which the section takes the form of an inverted L letter. A recess 13 is defined by the member 12 and the body surface. There is formed integrally with the rear cylindrical portion 17 at the end thereof a wall 18 opened at the center thereof.

The reflector 20 also takes the form of a hollow bell opened as a whole at both ends thereof. A reflecting mirror is formed in the beveled portion 21. The beveled portion 21 is formed as a paraboloid of revolution and has a reflecting mirror surface formed by metallizing the inner surface. The reflector 20 is fixed to the housing 10 with the reflector 20 disposed coaxially with the reflector 20 inside and supported to the reflector 20 by means of a well-known pivot bearing mechanism (not shown), so that the reflector 20 can be adjusted in angulation vertically and horizontally.

The bulb 30 is a well-known one provided with a cap 31. For example, it is a H4 halogen lamp bulb conforming to the regulations on the automotive lamp assemblies. It is disposed inside the reflector 20 with the main- and sub-beam filaments thereof located before and after the focus, respectively, of the reflecting mirror, and mounted in the reflector 20 by a well-known means, for example, by linear spring members.

The lens 40 is made of a synthetic resin or glass by molding, and it generally takes the form of a hollow, shallow dish opened at one end thereof. It is provided at the front wall 41 thereof with a cylindrical prism or the like (not shown) and also at the rear circumference thereof with a round cylindrical portion 42 of a diameter corresponding to the recess 13 at the front end of the housing 10. The lens 40 is installed to the housing 10 with the cylindrical portion 42 thereof fitted into the recess 13 at the front end of the housing 10 and with an adhesive 43 filled in the recess 13.

The rear cover 50 is made of a rubber by molding. It generally takes the form of a cap of which the flange is folded upwardly, namely a Mexican hat or sombrero. This rear cover 50 consists of a central portion 51 to be fitted onto the cap 31 of the bulb 30, a flange portion 52 to be disposed in contact with the wall 16 at the rear end of the cylindrical portion 14 of the housing 10 and a folded portion formed at the circumferential edge of the flange portion and which is to be disposed in contact with the circumference of the cylindrical portion 14 of the housing 10. Thus, when the rear cover 50 is fitted on the housing 10, it seals the back of the reflector 20. The central portion 51 of the rear cover 50 50 takes the form of a hollow cone opened at both ends and has many parallel irregularities 54 on the inner wall thereof. The flange portion 52 has formed thereon a rib 55 and flat wall 56 which are concentrical to each other.

The cover holder 60 is made of a synthetic resin, similarly to the housing 10, and it generally takes the form of a cylinder. The cover holder 60 has a body 61 consisting of two cylindrical portions formed integrally with each other, and it is provided six reinforcements 62 at the rear thereof. These reinforcements 62 are disposed at regular angular spaces with respect to the central axis of the cover holder 60 and formed integrally with the body 61. Also, the body 61 has bores of diameters corresponding to the cylindrical portions 14 and 17, respectively, of the housing 10. The cylindrical portions 14 and 17 are fitted into these bores located above the folded portion 53 of the rear cover 50. Namely, they are provided to fix the rear cover 60 to the housing 10.

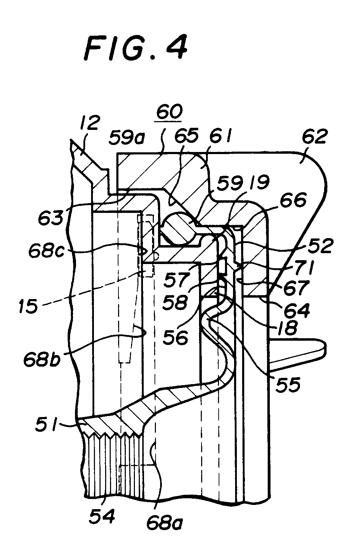

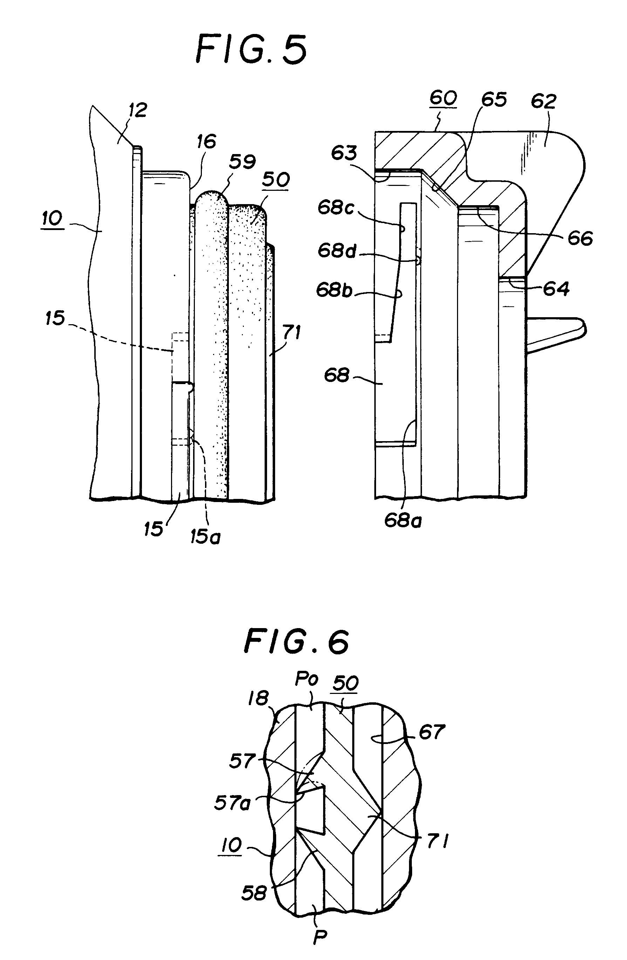

The cover holder 60 is fixed to the housing 10 by inserting the pawls 15 on the housing 10 into the recesses 68 formed in the cover holder 60. The pawls 15 are provided on the cylindrical portion 14 located at the rear of the housing 10. Although the Figures show only one pawl for the simplicity of illustration, three pawls are disposed on the extension of the end face 16 of the cylindrical portion 14 in practice. They are arranged on the cylindrical portion 14 at regular angular spaces with respect to the central axis of the reflector 20. Each pawl is provided with a projection 15a at the rear thereof. On the other hand, recesses 68 are formed on the inner circumference 63 in the cover holder 60 at regular angular spaces with respect to the central axis of the cover holder 60. As obvious from Figs. 4 and 5, the recesses themselves take the form of nearly an inverted L letter as viewed in their respective planes. In other words, each recess consists of two portions of which the one is open at the front edge of the cover holder body 61 and also parallel to the central axis of the cover holder 60 while the other is perpendicular to that central axis. The wall 68a forming a part of the recess 68 and located at the rear end of the body 61 is in a plane perpendicular to the central axis of the cover holder 60. However, the front wall forming the recess 68 consists of a taper wall 68b and a wall 68c parallel to the wall 68a. The width of the inlet of this recess, namely, the width of the recess portion opened at the front end face of the cover holder body 61, is somewhat larger than that of the pawl 15 on the reflector 20, and the spacing between the walls 68a and 68c of the recess 68 is somehow smaller than the thickness of the pawl 15. The wall 68a has formed therein a depression 68d for reception of a projection 15a provided on the pawl 15.

The cover holder 60 is fixed to the housing 10 by fitting it from outside the rear cover 50, with the pawl 15 on the housing 10 fitted in the recess 68 and rotating the whole cover holder 60 while pushing toward the housing 10, as shown in Fig. 5. As the cover holder 60 is rotated, the pawl 15 goes into the recess 68. That is to say, the pawl 15 is moved from the taper wall 68b of the recess 68 until it abuts the inner end of the recess 68. Then the projection 15a enters the depression 68d in the recess wall 68a and is positioned there and retained between the parallel walls 68a and 68c. The cover holder 60 is fixed in the housing 10 in this way. Concerning the rear cover 50 at this time, the wall 56 at the flange portion thereof 52 is held between the end wall 16 of the cylindrical portion 14 of the housing 10 and the inner wall 67 of the cover holder 60, and while the folded portion 53 thereof is held between the outer circumference of the cylindrical portion 14 of the housing 10 and the inner circumference 66 of the cover holder 60, as shown in Fig. 4.

According to the present invention, a seal is formed between the cover holder 60 and rear cover 50 as well as between the rear cover 50 and reflector 20, when the rear cover 50 is fixed to the housing 10 by means of the cover holder 60, to prevent any water from entering the housing 10 inside from a clearances between the cover holder 60 and rear cover 50 as well as between the rear cover 50 and housing 10.

To this end, the rear cover 50 has formed at the free end of the folded portion 53 thereof a sealing member 59 which has a circular section. This sealing member serves as an O-ring. It is provided along the whole circumference of the free end of the folded portion 53. Further, there is provided a small projection 59a along the whole circumference of the outermost surface of the O-ring 59. The cover holder 60 is fitted onto the rear cover 50 at only the bore 63 and the bore 64 thereof, both these holes being cylindrical. The cover holder 60 has also a conical bore 65 formed contiguously to the bore 63, and a further bore 66 contiguous to the conical bore 65 is circular. The taper wall has a gradient of, for example, 45 degrees with respect to the central axis of the cover holder 60. The diameter of the bore 63 corresponds to the cylindrical portion 14 of the housing 10, the bore 66 has a diameter corresponding to the cylindrical portion 17 of the housing 10, the diameter of the bore 64 corresponds to the opening in the wall 18 at the rear end of the cylindrical portion 17 of the housing 10, and the wall 67 between the bores 64 and 66 has a width corresponding to the wall 18 at the rear end of the housing 10.

As the cover holder 60 is mounted on the back of the housing 10, an O-ring receiving space is defined by the wall 16 at the rear end of the cylindrical portion 14 of the housing 10, circumference of the cylindrical portion 17 and the wall of the conical 66 of the cover holder 60. The sealing member 59 of the rear cover 50 is force-fitted into the O-ring receiving space to provide a sealing between the rear cover 50 and housing 10 as well as between the rear cover and cover holder 60. At the same time, the projection 59a on the O-ring is forced to the wall 16 of the housing 10 to provide a sealing between the housing 10 and rear cover 50.

Further, there is provided a projection 19 near the rear end of the cylindrical portion 17 of the housing 10. The projection 19 is located on the extension of the wll 18 and extended along the total circumference of the cylindrical portion 17 to force the folded portion 53 of the rear cover 50 into the bore 66 in the cover holder 60, thereby preventing any water leaked from the O ring 59 from entering the reflector 20 inside.

Also there are provided projections 57 and 58 concentrically to each other on the wall 56 at the flange portion 59 of the rear cover 50. The one 57 of these projections is tapered as it goes toward its free end as shown as enlarged in Fig. 6. It has the sectional form of, for example, a triangle of which the apex is oriented inwardly as viewed from the base of the projection. And the inner wall of this projection, namely, a side wall 57a oriented toward the central portion 51 of the rear cover 50, is inclined inwardly in the passage defined by the housing 10 and rear cover 50, namely, the rear end face of the housing 10 and the wall 67 of the cover holder 60 which faces the rear end face, and connecting to the internal space of the housing 10. The other projection 58 is formed as a mirror image of the projection 57.

The above-mentioned projections are so disposed as to face the wall 18 at the rear end of the housing 10 when the rear cover 50 is mounted to the housing 10, and as the cover holder 60 is installed, the projections are forced at the ends thereof to the wall 18 and elastically deformed to form a third block against entry of any external water, and prevent the sealing effect of the O-ring 59 and projection 19 from being deteriorated by the air flowing outwardly from inside the housing 10 when the pressure inside the housing 10 exceeds the atmospheric pressure after the bulb 30 is turned on. As the pressure in the housing 10 increases after the bulb 30 is turned on, the difference in pressure between outside and inside the housing, namely, the difference between the housing internal pressure P and external pressure Po, causes the projection 57 to be distorted and further strongly pressed to the wall 18 of the housing 10 to block the air under pressure inside the housing 10 from reaching the seal provided by the O-ring 59 and projection 19, thereby preventing any water from coming in through the seal.

Further, there is provided a projection 71 on the back of the surface 56 of the flange portion 52 forming the rear cover 50. This projection is nearly isosceles-triangular in sectional shape of which the apex is oriented outwardly and the bottom is disposed correspondingly to the projections 57 and 58. When the rear cover 50 is mounted to the housing 10, the projection 71 faces the wall 67 of the cover holder 60 and has the apex thereof pressed by the wall 67 to force the projections 57 and 58 at the opposite side to the wall 18 of the housing 10, thereby assuring the sealing effect of the projections 57 and 58.

According to the present invention, the bulb 30 can be replaced as follows. First, the cover holder 60 is rotated until the pawl 15 comes to the open end of the recess 68, the entire cover holder 60 is pulled rearward and removed from the housing 10, and then the rear cover 50 is dismounted from the housing. The bulb 30 is extracted from the reflector 20 along with the supports 32 and 33. A new bulb is introduced between the supports, and the latter are fitted into the reflector 20. The cover holder 60 is fitted onto the bulb cap 31 and housing 10. At this time, even if the rear cover 50 is not correctly fitted on the back of the housing 10, the conical wall of the bore 65 in the cover holder 60 is in contact with the sealing member 57 of the rear cover 50 while the wall 67 of the cover holder 60 is in contact with the flange portion 52 of the rear cover 50, so that the rear cover 50 can be set in place by pushing it.

As having been described in the foregoing, the rear cover 50 cannot only be set in place by means of the cover holder 60 60, but the projection 19 on the cylindrical portion 17 of the reflector 20 forces the folded portion of the rear cover 50 into the bore 66 of the cover holder 60 and also forcibly fits the sealing member or projection 59 into the O-ring space defined by the wall 16 at the rear end of the cylindrical portion 14 of the housing 10, circumference of the cylindrical portion 17 and the wall of the conical bore 66 of the cover holder 60 while forcing the projections 57 and 58 to the wall 18 of the housing 10. That is, even if the rear cover 50 or cover holder 60 is not correctly fitted, the clearance between the housing 10 and cover holder 60 can be sealed by any of the triple seals so that the entry of any water from outside into the housing 10 can be surely prevented. Also, even when the pressure inside the housing 10 becomes higher than the atmospheric pressure as the air therein is heated by the bulb filament energized, the air under pressure from the housing 10 inside can be blocked by the projections 57 and 58. Thus, the sealing effect against the entry of any water from outside the housing 10 can be maintained.

In the foregoing, an automotive lamp assembly according to the present invention has been described which comprises a housing 10 and lens 40 with a reflector 20 disposed inside a lamp house defined by the housing 10 and lens 40 and with a bulb 30 mounted in the reflector 20. However, the present invention is not limited to this embodiment, but it can be embodied in various many forms without departing the scope of the present invention, for example, by providing a reflecting mirror in the housing, a bulb in this housing, namely, by using a housing with which a reflector is formed integrally.

## Claims

1. An automotive lamp assembly, comprising a lamp housing (10) having a hollow cylindrical portion provided with a rear opening, a reflector (20) disposed in the lamp housing (10), a bulb (30) disposed in and attached to the reflector (20), a rear cover (50) made of an elastic material which is fitted on the rear ends of the bulb (30) and lamp housing (10), and a cover holder (60) fitted and coupled to the housing (10) with the rear cover (50) held between the cover holder (60) and the housing (10);
said rear cover (50) having a boss portion (51) to be fitted to the bulb at a central region, having first sealing means (59) provided at an outer region thereof which is fitted between the housing (10) and the cover holder (60), and having second sealing means (57,58,71) provided on both sides thereof in a region located between the central and outer regions;
**characterised in that,**
said second sealing means comprises two projections (57, 58) provided on one surface of the rear cover (50) facing the rear end of the housing (10) and are tapered towards their free ends so as to be in contact with the rear end of the housing (10) and deformable to block the entry of any external water when the rear cover (50) is mounted to the housing (10), that said second sealing member comprises a further projection (71) provided on the other side of the rear cover (50) facing the cover holder (60) so as to be in contact with the cover holder (60),
that a plurality of pawls (15) are provided on the outer circumference of the cylindrical portion of the housing (10), and a plurality of recesses (68) are provided corresponding to the pawls (15) on the cover holder (60) so that the cover holder (60) is guided by the pawls (15) and the recesses (68) to be fixed with respect to the housing (10), and
in that each of said recesses (68) consists of a first portion (68a) so formed in parallel with a central axis of the lamp assembly as to guide each of the pawls in a direction of the central axis, a second portion (68b) continuous with the first portion (68a) and tapered with respect to the central axis so that the cover holder (60) is moved with rotation in the direction of said central axis, and a third portion (68c) continuous with the second portion (68b) and so formed on a plane perpendicular to the central axis as to keep the corresponding pawl in position.

2. An automotive lamp assembly according to claim 1, **characterized in that** said cover holder (60) has a bore (65) in which the rear end of the housing (10) is fitted, and that said first sealing means (59) in the form of an O-ring is provided at the portion of said rear cover (50) corresponding to the cylindrical portion of said housing (10) and also is of a size corresponding to the diameter of the bore wall of said cover holder (60).

3. An automotive lamp assembly according to claim 2, **characterized in that** said housing (10) has an end wall (18) at the rear opening of the cylindrical portion thereof, and which end wall has an opening, and that said cover holder (60) has an end wall (67) which is in contact with said end wall of said housing (10).

4. An automotive lamp assembly according to one of the claims 1 to 3, **characterized in that** said projections (57, 58) are triangular in sectional form.

5. An automotive lamp assembly according to one of the claims 1 to 4, c**haracterized in that** said further projection (71) takes the sectional form of a triangle of which the apex is directed toward said cover holder (60).

## Patentansprüche

1. Kraftfahrzeugscheinwerfer mit einem Lampengehäuse (10), das einen mit einer hinteren Öffnung versehenen hohlen Zylinderabschnitt aufweist, einem im Lampengehäuse (10) angeordneten Reflektor (20), einer im Reflektor angeordneten und an diesem angebrachten Glühlampe (30), einer rückseitigen Abdekkung (50), die an den hinteren Enden der Glühlampe (30) und des Lampengehäuses (10) befestigt ist, und einem in das Gehäuse (10) eingesetzten und mit diesem gekoppelten Abdekkungshalter (60), wobei die hintere Abdeckung (50) zwischen dem Abdeckungshalter (60) und dem Gehäuse (10) gehalten ist;
wobei die hintere Abdeckung (50) einen in einem Mittelbereich der Glühlampe anbringbaren Kopfabschnitt (51) und ein im äußeren Bereich derselben vorgesehenes Dichtungsmittel (59) aufweist, das zwischen dem Gehäuse (10) und dem Abdeckungshalter (60) eingesetzt ist und in einem Bereich zwischen den mittleren und den äußeren Bereichen an beiden Seiten derselben vorgesehene zweite Dichtungsmittel (57, 58, 71);
**dadurch gekennzeichnet,**
daß die zweiten Dichtungsmittel zwei Vorsprünge (57, 58) aufweisen, die an einer zum hinteren Ende des Gehäuses (10) weisenden Oberfläche der hinteren Abdeckung (50) vorgesehen sind, und die sich zu ihren freien Enden hin verjüngen, um mit dem hinteren Ende des Gehäuses (10) in Berührung zu stehen, und um zur Verhinderung des Eindringens von Wasser von außen bei Befestigung der hinteren Abdeckung (50) am Gehäuse (10) verformbar zu sein,
daß das zweite Dichtungsmittel einen weiteren Vorsprung (71) aufweist, der an der anderen zum Abdeckungshalter (60) weisenden Seite der hinteren Abdeckung vorgesehen ist, um mit dem Abdeckungshalter (60) in Berührung zu stehen,
daß eine Vielzahl von Sperrklinken (15) am äußeren Umfang des Zylinderabschnittes des Gehäuses (10) vorgesehen sind, und eine Vielzahl von den Sperrklinken (15) entsprechender Ausnehmungen (68) an dem Abdeckungshalter (60) vorgesehen sind, so daß der Abdeckungshalter (60) zur Befestigung am Gehäuse (10) durch die Sperrklinken (15) und die Ausnehmungen (68) geführt ist, und
daß jede der Ausnehmungen (68) aus einem ersten Abschnitt (68), der so parallel zur Mittelachse des Scheinwerfers ausgebildet ist, um jede der Sperrklinken in Richtung der Mittelachse zu führen, einem mit dem ersten Abschnitt (68a) kontinuierlich verbundenen zweiten Abschnitt (68b), der bezüglich der Mittelachse verjüngt ist, so daß der Abdeckungshalter (60) bei Drehung in Richtung der Mittelachse bewegt wird, und einem mit dem zweiten Abschnitt (68b) verbundenen dritten Abschnitt (68c), der in einer Normalebene zu der Mittelachse ausgebildet ist, um die zugehörige Sperrklinke in ihrer Lage zu halten, besteht.

2. Kraftfahrzeugscheinwerfer nach Anspruch 1, **dadurch gekennzeichnet,** daß der Abdeckungshalter (60) eine Bohrung (65) aufweist, in die das hintere Ende des Gehäuses (10) eingesetzt ist, und daß das erste Dichtungsmittel (59) in der Gestalt eines O-Ringes an einem Abschnitt der hinteren Abdekkung (50) vorgesehen ist, die dem zylindrischen Abschnitt des Gehäuses (10) entspricht und in seiner Größe dem Durchmesser der Bohrungswand des Abdeckungshalters (60) entspricht.

3. Kraftfahrzeugscheinwerfer nach Anspruch 2, **dadurch gekennzeichnet,** daß das Gehäuse (10) eine Begrenzungswand (18) an der hinteren Öffnung des zylindrischen Abschnittes aufweist, und die Begrenzungswand eine Öffnung besitzt, und daß der Abdeckungshalter (60) eine Begrenzungswand (67) aufweist, die mit der Begrenzungswand des Gehäuses (10) in Berührung steht.

4. Kraftfahrzeugscheinwerfer nach einem der Ansprüche 1 bis 3**, dadurch gekennzeichnet,** daß die Vorsprünge (57, 58) dreieckige Querschnitte aufweisen.

5. Kraftfahrzeugscheinwerfer nach einem der Ansprüche 1 bis 4, **dadurch gekennzeichnet,** daß der zusätzliche Vorsprung (71) einen Querschnitt in der Form eines Dreiecks aufweist, dessen Spitze auf den Abdeckungshalter (60) gerichtet ist.

## Revendications

1. Projecteur d'automobile comprenant un boîtier (10) ayant une partie cylindrique creuse pourvue d'une ouverture arrière, un réflecteur (20) placé dans ce boîtier (10), une lampe (30) placée dans ce réflecteur (20) et fixée à celui-ci, un capuchon arrière (50) en matière élastique monté sur les extrémités arrière de la lampe (30) et du boîtier (10), et un fixe-capuchon (60) monté sur le boîtier (10) et accouplé à celui-ci, le capuchon arrière (50) étant immobilisé entre ce fixe-capuchon (60) et le boîtier (10),
le capuchon arrière (50) ayant dans une région centrale une partie protubérante (51) destinée à s'appliquer sur la lampe, ayant un premier moyen d'étanchéité (59) prévu dans une région extérieure qui se place entre le boîtier (10) et le fixe-capuchon (60), et ayant des seconds moyens d'étanchéité (57, 58, 71) prévus sur ses deux faces dans une région située entre la région centrale et la région extérieure,
caractérisé par le fait
que les seconds moyens d'étanchéité comprennent deux saillies (57, 58) prévues sur une face du capuchon arrière (50) dirigée vers l'extrémité arrière du boîtier (10) et qui s'amincissent vers leur extrémité libre de façon à être en contact avec l'extrémité arrière du boîtier (10) et être déformables pour empêcher l'entrée d'eau extérieure lorsque le capuchon arrière (50) est monté sur le boîtier (10),
que les seconds moyens d'étanchéité comprennent une autre saillie (71) prévue sur l'autre face du capuchon arrière (50) dirigée vers le fixe-capuchon (60) de façon à être en contact avec celui-ci,
qu'une série de linguets (15) sont prévus sur la circonférence extérieure de la partie cylindrique du boîtier (10) et une série d'évidements (68) sont prévus en correspondance avec ces linguets (15) sur le fixe-capuchon (60) de façon que celui-ci soit guidé par les linguets (15) et les évidements (68) pour être fixé par rapport au boîtier (10), et
que chacun des évidements (68) est constitué d'une première partie (68a) faite parallèlement à l'axe du projecteur de façon à guider chacun des linguets dans la direction de cet axe, d'une deuxième partie (68b) faisant suite à la première (68a) et allant en diminuant par rapport à l'axe de façon que le fixe-capuchon (60) soit mû avec rotation dans la direction de l'axe, et d'une troisième partie (68c) faisant suite à la deuxième (68b) et faite dans un plan perpendiculaire à l'axe de façon à maintenir le linguet correspondant en position.

2. Projecteur d'automobile selon la revendication 1, caractérisé par le fait que le fixe-capuchon (60) a un alésage (65) dans lequel est engagée l'extrémité arrière du boîtier (10) et que le premier moyen d'étanchéité (59), qui a la forme d'un joint torique, est prévu dans la partie du capuchon arrière (50) correspondant à la partie cylindrique du boîtier (10) et est d'une dimension correspondant au diamètre de la paroi de l'alésage du fixe-capuchon (60).

3. Projecteur d automobile selon la revendication 2, caractérisé par le fait que le boîtier (10) a une paroi d'extrémité (18) à l'ouverture arrière de sa partie cylindrique et cette paroi d'extrémité a une ouverture, et que le fixe-capuchon (60) a une paroi d'extrémité (67) qui est en contact avec cette paroi d'extrémité du boîtier (10).

4. Projecteur d automobile selon l'une des revendications 1 à 3, caractérisé par le fait que les saillies (57, 58) sont de section triangulaire.

5. Projecteur d'automobile selon l'une des revendications 1 à 4, caractérisé par le fait que la section de l'autre saillie (71) a la forme d'un triangle dont le sommet est dirigé vers le fixe-capuchon (60).
